Europäisches Patentamt

European Patent Office

Office européen des brevets

(11) Publication number: **0 602 571 A2**

# EUROPEAN PATENT APPLICATION

(21) Application number: **93120011.7**

(22) Date of filing: **11.12.93**

(51) Int. Cl.5: **G11B 15/61**, G11B 15/665

(30) Priority: **15.12.92 JP 333922/92**

(43) Date of publication of application:
**22.06.94 Bulletin 94/25**

(84) Designated Contracting States:
**DE GB NL**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Honsho, Hironori**
**13-8-1503, Matsuya-cho**
**Neyagawa-shi, Osaka-fu 572(JP)**
Inventor: **Murata, Shigeki**
**2-3-16, Rokujo Midorimachi**
**Nara-shi, Nara-ken 630(JP)**
Inventor: **Okamoto, Satoshi**
**1-16-1, Higashinanamatsu-cho**
**Amagasaki-shi, Hyogo-ken 660(JP)**

(74) Representative: **Eisenführ, Speiser & Partner**
**Martinistrasse 24**
**D-28195 Bremen (DE)**

(54) **Magnetic recording and/or reproducing apparatus.**

(57) A magnetic recording and/or reproducing apparatus (1) for recording or reproducing information on or from a magnetic tape (4) accommodated in a tape cassette (3) has a horizontal chassis (5) for mounting the tape cassette (3) loaded in the apparatus (1) and a vertical chassis (6) on which a drum assembly (2) is mounted. The horizontal chassis (5) and the vertical chassis (6) are integrally formed with each other. Alternatively, the two chassis (5, 6) may be separate from each other. The drum assembly (2) is made up of a stationary drum (2a) securely mounted on the vertical chassis (6) and a rotary drum (2b) coaxially mounted above and rotatably supported by the stationary drum (2a). The rotary drum (2b) has a plurality of magnetic heads mounted thereon and also has an axis of rotation (2d) lying in a plane generally perpendicular to a direction widthwise of the magnetic tape (4) accommodated in the tape cassette (3) placed on the horizontal chassis (5). A plurality of guide members (7, 9, 11, 12, 19) are movably mounted on the vertical chassis (6) to wind the magnetic tape (4) around the drum assembly (2) in a spiral path at a given angle of contact.

Fig.3

## BACKGROUND OF THE INVENTION

### Field of the Invention

The present invention relates to a magnetic recording and/or reproducing apparatus for recording or reproducing information on or from a magnetic tape wound around a drum assembly.

### Description of the Prior Art

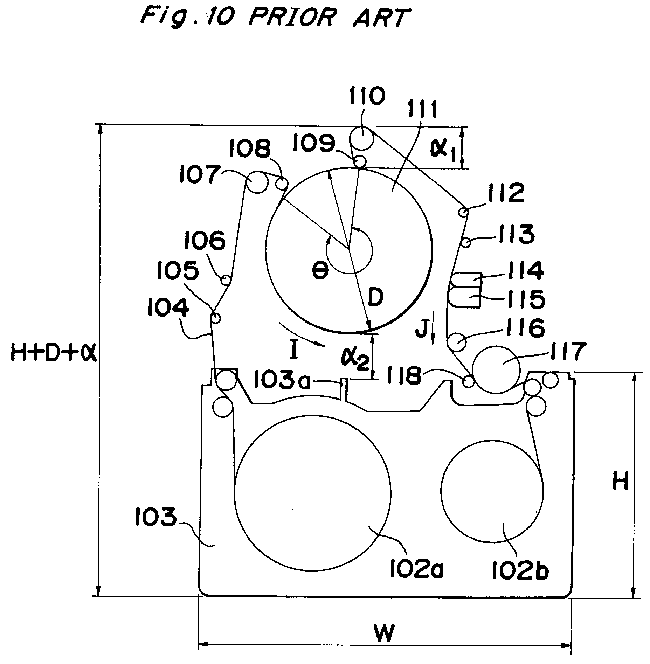

Fig. 10 depicts a conventional magnetic recording and/or reproducing apparatus such as disclosed in Japanese Patent Publication (examined) No. 2-56740.

As shown in Fig. 10, a tape cassette 103 of dimensions W × H accommodating a supply reel 102a and a take-up reel 102b rotatably mounted therein is loaded in or unloaded from the magnetic recording and/or reproducing apparatus. During loading, a loading mechanism pulls a magnetic tape 104 from the supply reel 102a to wind the magnetic tape 104 around a drum assembly 111 of a diameter D at an approximately 270° angle of contact, and then guides the magnetic tape 104 back to the take-up reel 102b.

At this moment, a tension post 105, a plurality of guide posts 106, 107, 110, 113, and 116, a plurality of inclined guide posts 108, 109, and 112, an audio erase head 114, a fixed audio head 115, a pinch roller 117, and a capstan 118 are properly positioned along a travelling path of the magnetic tape 104.

In this apparatus, the magnetic tape 104 is driven in a direction of an arrow J by rotation of the capstan 118. Signals are recorded on or reproduced from the magnetic tape 104 as the drum assembly 111 rotates in a direction of an arrow I.

As disclosed in, for example, Japanese Patent Publication (examined) No. 60-50105, the size of the drum assembly 111 can be reduced by increasing the angle of contact of the magnetic tape 104 to the drum assembly 111.

The diameter of the drum assembly 111 and the angle of contact are approximately 41.33 mm ($=D_0$) and 270° ($=\theta_0$), respectively, in the apparatus shown in Fig. 10. The relationship between the angle of contact $\theta$ to the drum assembly 111 and the drum diameter D is given by:

$$D = D_0 \times (\theta_0/\theta).$$

It is therefore possible to reduce the drum diameter D by increasing the angle of contact $\theta$, but the need to maintain sufficient space for the inclined guide posts 108 and 109 and other components limits the angle of contact $\theta$ and the drum diameter D to approximate maximums of 330° and 33.8 mm, respectively. With this configuration, the circuit scale and power consumption required for signal processing also increase, making it difficult to significantly reduce the size of the complete apparatus.

In the conventional apparatus described above, the minimum depth of the apparatus is determined by the cassette dimension H, the drum diameter D, and a dimension $\alpha$ ($= \alpha1 + \alpha2$), i.e., the sum of an area $\alpha1$, the space required for the guide posts used to wind the magnetic tape 104 around the drum assembly 111 at a predetermined angle of contact, and an allowance $\alpha2$, needed to assure a sufficient gap between projections of the tape cassette 103 and the drum assembly 111. The minimum depth dimension of this apparatus is thus (H + D + $\alpha$).

It is possible to reduce the allowance $\alpha2$ or to reduce the drum diameter D to thereby reduce the size of the apparatus. No great reduction in overall size can be expected by reducing the allowance $\alpha2$, however, because of the relatively small percentage of $\alpha2$ in the total depth dimension. It is also necessary to maintain a minimum distance from the point where the magnetic tape 104 trails off from the drum assembly 111 (near the guide post 109) to the fixed head, and simply decreasing the allowance $\alpha2$ can lead to contact problems between the guide post 116, the pinch roller 117, the capstan 118, and the tape cassette 103.

Also, the distance between the location where audio signals are recorded and the location where video signals are recorded is generally fixed to achieve a phase matching between the audio and video signals to be recorded or reproduced. Therefore, the fixed audio head 115, the audio erase head 114, and a control head (not shown) are disposed close each other, and the capstan 118 used for tape drive is positioned downstream (toward the take-up reel 102b of the tape cassette 103) from a group of those heads, with respect to the direction of travel of the magnetic tape 104, to facilitate a tape transport control. In view of this, the area in which the magnetic tape 104 is drawn outwardly from the tape cassette 103 and turned around the guide elements including the drum assembly 111 is necessitated excessively by a predetermined distance and, therefore, reduction in size of the apparatus is hampered.

## SUMMARY OF THE INVENTION

The present invention has been developed to overcome the above-described disadvantages.

It is accordingly an object of the present invention to provide a compact magnetic recording and/or reproducing apparatus having a reduced size in a direction of insertion of a tape cassette thereinto.

In accomplishing the above and other objects, the apparatus according to the present invention comprises a chassis for mounting the tape cassette loaded in the apparatus, a drum assembly mounted on the chassis and having a plurality of magnetic heads mounted thereon, and a plurality of guide members, movably mounted on the chassis, for winding the magnetic tape around the drum assembly in a spiral path at a given angle of contact. The drum assembly has an axis of rotation lying in a plane generally perpendicular to a direction widthwise of the magnetic tape accommodated in the tape cassette mounted on the chassis.

Conveniently, the chassis comprises a first chassis component for mounting the tape cassette loaded in the apparatus and a second chassis component on which the drum assembly is mounted. The second chassis component is secured to or otherwise integrally formed with the first chassis component so as to lie generally perpendicular thereto.

The apparatus further comprises a tape drive means, rotatably mounted on the chassis, for driving the magnetic tape in a direction longitudinally of the magnetic tape.

Advantageously, a drum assembly comprises a stationary drum securely mounted on the chassis and a rotary drum coaxially mounted above and rotatably supported by the stationary drum. The stationary drum has a tape guide shoulder defined thereon so as to extend slantwise in a circumferential direction thereof for slidingly guiding and supporting one of opposite side edges of the magnetic tape. The stationary drum also has a plurality of recesses defined therein and communicating with an outside circumference of the stationary drum so that projections formed on a front wall of the tape cassette may be partially accommodated in such recesses, respectively.

The apparatus also comprises a fixed audio head for recording or reproducing signals on or from the magnetic tape in the longitudinal direction of the magnetic tape, and an audio erase head for erasing only signals recorded by the fixed audio head. Preferably, the tape drive means is positioned between the fixed audio head and the audio erase head.

By means of this configuration, the drum diameter can be contained in a plane parallel to the direction across the thickness of the cassette. It is therefore possible to significantly reduce the plane area of the mechanism, achieving a magnetic recording and/or reproducing apparatus with a mechanism approximately 30% smaller in depth than that possible with the conventional technology.

It is therefore possible by means of the present invention to significantly reduce the depth dimension of the mechanism even when using a relatively large drum assembly because the axis of rotation of the drum assembly lies generally perpendicular to the magnetic tape accommodated in the tape cassette.

According to the present invention, because the number of fixed posts between the drum assembly and a capstan for driving the magnetic tape is minimized, the load on the tape drive means can also be reduced. Further reductions in apparatus size can also be achieved by inserting the projections of the tape cassette into the recesses defined in the stationary drum during loading. By positioning the fixed audio head and the audio erase head separated before and after the capstan, greater freedom is achieved for capstan placement, and further size reductions can thus be achieved.

## BRIEF DESCRIPTION OF THE DRAWINGS

The above and other objects and features of the present invention will become more apparent from the following description of a preferred embodiment thereof with reference to the accompanying drawings, throughout which like parts are designated by like reference numerals, and wherein:

Fig. 1 is a perspective view of a tape cassette for use in a magnetic recording and/or reproducing apparatus according to the present invention;

Fig. 2 is a perspective view of the tape cassette of Fig. 1 when the tape cassette is loaded in the apparatus;

Fig. 3 is a perspective view of the apparatus in which the tape cassette of Fig. 1 has been loaded;

Fig. 4 is a top plan view of the apparatus of Fig. 3;

Fig. 5 is a front view of the apparatus of Fig. 3;

Fig. 6 is a side view of the apparatus of Fig. 3;

Fig. 7 is a perspective view of a drum assembly mounted in the apparatus of Fig. 3;

Fig. 8 is a schematic diagram indicating the relationship between fixed heads and a magnetic tape;

Fig. 9 is a perspective view of a modified arrangement of the tape cassette and the drum assembly; and

Fig. 10 is a top plan view of a conventional magnetic recording and/or reproducing apparatus.

## DETAILED DESCRIPTION OF THE PREFERRED EMBODIMENTS

A preferred embodiment of the present invention will now be described with particular reference to the accompanying drawings. A magnetic tape recording and/or reproducing apparatus, hereinafter referred to as a tape player, makes use of a generally rectangular standardized tape cassette 3 having a width, a thickness and a depth, these dimensional nomenclature being based on the direction in which the tape cassette is viewed as it is inserted into the tape player through a rectangular cassette receiving mouth. The depth of the tape cassette 3 therefore conforms to the direction of insertion of the tape cassette into the tape player.

The tape cassette with which the tape player according to the present invention is operable may be similar to a well-known VHS tape cassette, VHS-C tape cassette, 8mm video tape cassette or DAT tape cassette. It is, however, pointed out that, in order for this tape cassette to be effectively utilized in association with the tape player of the present invention, it is essential by the reason which will become clear from the subsequent description that, like any one of the 8mm video tape cassette, the VHS-C tape cassette and the DAT tape cassette, a front wall of the tape cassette which may be positioned adjacent a magnetic head carrier drum assembly within the tape player must be set backwards, or otherwise recessed or cut out, so as to allow a portion of a length of magnetic tape to be exposed to the outside regardless of whether the tape cassette has a lid for concealing that portion of the magnetic tape.

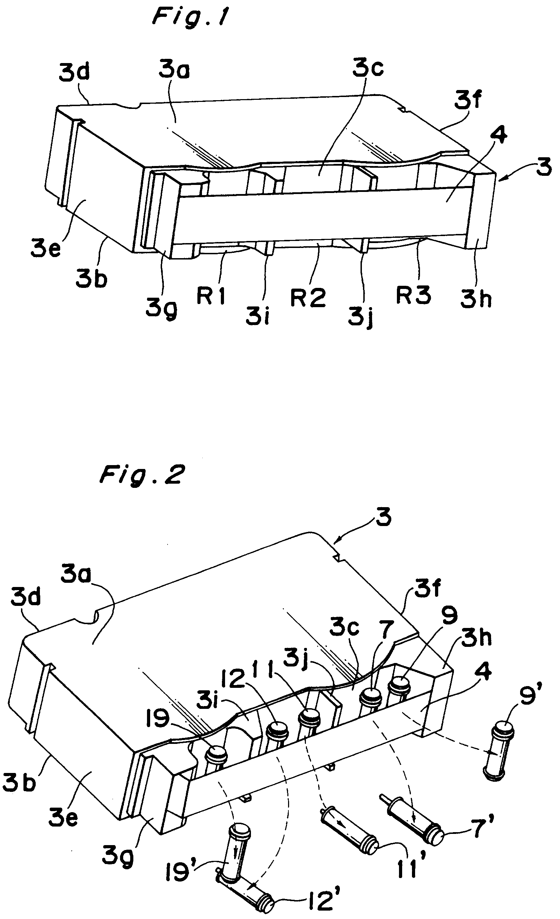

More specifically, so far as shown in Figs. 1 and 2, the tape cassette conveniently utilizable in the practice of the present invention is generally identified by 3 and is of a rectangular box-like configuration having top and bottom walls 3a and 3b, front and rear walls 3c and 3d, and a pair of side walls 3e and 3f. The front wall 3c is formed with a pair of hollow fingers 3g and 3h protruding frontwardly therefrom. This tape cassette 3 accommodates a pair of reels (not shown) around which opposite end portions of a length of magnetic tape 4 are wound, respectively, said length of magnetic tape 4 extending from one reel to the other reel via the hollow fingers 3g and 3h while a portion of said magnetic tape 4 extending between the hollow fingers 3g and 3h is exposed to the outside of the tape cassette 3. The front wall 3c of the tape cassette 3 also has a plurality of, for example, two, intermediate back-up walls 3i and 3j integrally formed therewith and positioned between the hollow fingers 3g and 3h so as to define three recesses R1, R2 and R3 in cooperation with the hollow fingers 3g and 3h.

Although not shown, the illustrated tape cassette 3 may, if desired, include a lid for selectively exposing and concealing that portion of the magnetic tape 4 extending between the hollow fingers 3g and 3h, and the use of such a lid is a routine expedient in any tape cassette utilizable in the video tape players.

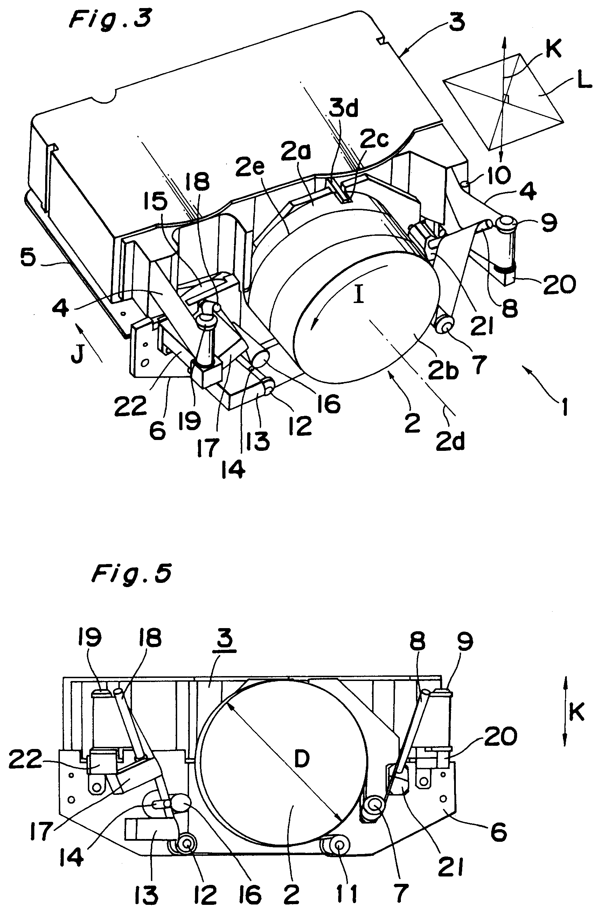

The tape player embodying the present invention will now be described with particular reference to Figs. 3 to 9. As shown in Fig. 3, the tape player, generally identified by 1, comprises a cylindrical drum assembly 2 having a stationary drum 2a and a rotary drum 2b coaxially mounted above and rotatably supported by the stationary drum 2a. The stationary drum 2a has its outer peripheral surface formed with a tape guide shoulder 2e extending slantwise in a circumferential direction thereof for slidingly guiding and supporting one of opposite side edges of the length of magnetic tape 4 whereas the rotary drum 2b carries a plurality of, for example, four, magnetic recording and reproducing heads (not shown). In any event, the cylindrical drum assembly 2 itself is well known in the art and the details thereof will not be reiterated herein for the sake of brevity.

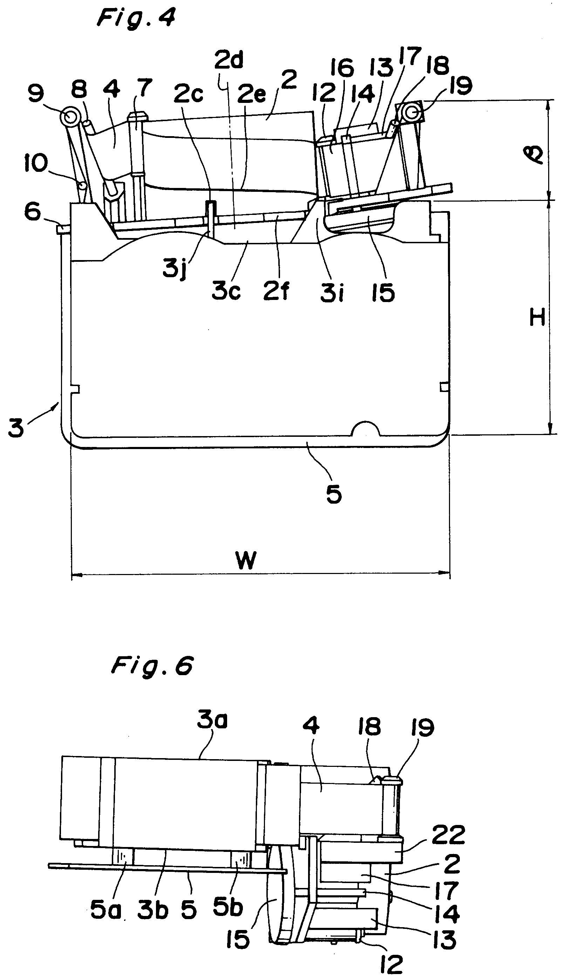

As best shown in Figs. 5 and 6, the tape player 1 also comprises a generally flat horizontal chassis 5 for the substantial support of the tape cassette 3 when the latter is inserted into the tape player 1, and a generally flat vertical chassis 6 secured to a front edge of the horizontal chassis 5 so as to lie generally perpendicular thereto. The cylindrical drum assembly 2 is carried by the vertical chassis 6 with the stationary drum 2a secured thereto, and has its cylindrical axis 2d lying generally perpendicular to the vertical chassis 6. The horizontal chassis 5 has two positioning pins 5a and 5b fixedly mounted thereon and extending upwardly therefrom for proper positioning of the tape cassette 3 during loading. The axis of rotation of the drum assembly 2 is within a plane L generally perpendicular to the widthwise direction K of the magnetic tape 4 accommodated in the tape cassette 3 (Fig. 3).

When it comes to a loading of the tape cassette 3 into the tape player 1 of the present invention, the tape cassette 3 is inserted into the apparatus through a cassette receiving mouth (not shown) so as to travel along a generally L-shaped loading path comprised of an initial loading path component and a final loading path component substantially perpendicular to the initial path component. More specifically, the tape cassette 3 once inserted into the cassette receiving mouth travels, for example, horizontally, along the initial path component towards an inserted position and is then drawn downwardly into the final loading path component from the inserted position towards a loaded position in a direction substantially perpendicular to the initial loading path component.

As the tape cassette 3 is moved along the final loading path component, two guide rollers 7 and 9, two guide rollers 11 and 12, and one guide roller 19 are accommodated in the recesses R3, R2, and R1, respectively, as shown in Fig. 2. Thereafter, that portion of the magnetic tape 3 exposed to the outside of the tape cassette 3 is drawn outwardly therefrom by the guide rollers 7, 9, 11, 12, and 19 so as to be turned around the drum assembly 2. To draw that portion of the magnetic tape 3, all of these rollers 7, 9, 11, 12, and 19 are driven substantially simultaneously, but are moved in different paths.

More specifically, the guide roller 7 is tilted approximately 90° in a direction away from the tape cassette 3 so as to lie substantially horizontally as shown by 7'. The guide roller 11 is initially moved laterally outwardly and is then tilted approximately 90° so as to make a detour around the drum assembly 2, and is finally positioned near the guide roller 7' so as to lie substantially horizontally as shown by 11'. The guide roller 12 is moved laterally outwardly and is then tilted approximately 90° so as to lie substantially horizontally as shown by 12'. The guide rollers 9 and 19 are moved away from the tape cassette 3 and are then moved laterally outwardly so as to lie substantially vertically as shown by 9' and 19', respectively. These guide rollers are rotatably mounted on respective support members as will be discussed hereinafter.

Referring to Fig. 3 depicting the tape player 1 in which the tape cassette 3 has been loaded, the tape player 1 also comprises a tension post 10 for holding in tension the magnetic tape 4 supplied from the tape cassette 3, and an inclined guide post 8 secured to a support member 21, which is fixedly mounted on the vertical chassis 6. The direction of travel of the magnetic tape 4 supplied from the tape cassette 3 is changed by the guide roller 9, the inclined guide post 8 and the guide roller 7.

The tape player 1 further comprises an inclined guide post 18 fixedly mounted on the vertical chassis 6 on the take-up side of the tape cassette 3. A capstan spindle 14 for driving the magnetic tape 4 in the lengthwise direction thereof, and a capstan motor 15 for rotating the capstan spindle 14 are also provided such that the magnetic tape 4 is held and driven between the capstan spindle 14 and a pinch roller 16. The capstan motor 15 is secured to the vertical chassis 6. The capstan spindle 14 and the pinch roller 16 are positioned below the bottom wall 3b of the tape cassette 3. By providing these below the tape cassette 3, the tape cassette 3 can be loaded overlapping the capstan spindle 14 in the direction shown by K, and the depth dimension of the tape layer 1 can thus be reduced to (H + β), as best shown in Fig. 4.

It is to be noted that when the tape cassette 3 is loaded in the apparatus, the pinch roller 16 is initially away from the vertical chassis 6 and is subsequently moved towards the vertical chassis 6 in a direction longitudinally thereof after the guide roller 12 has been positioned as shown in Fig. 5.

The tape player 1 further comprises a fixed head assembly 13 and a fixed audio head 17. The fixed head assembly 13 comprises an audio erase head for erasing audio signals along the length of the magnetic tape 4, and a control head for recording or reproducing a control signal used for lengthwise tape transport control.

As with the axis of rotation 2d of the drum assembly 2, the centers of rotation of the capstan spindle 14 and the pinch roller 16 are also aligned generally parallel to the plane L. Specifically, no inclined post is provided from the drum assembly 2 to the capstan spindle 14 driving the magnetic tape 4.

The tape player 1 also comprises a plurality of support members, driven by any known suitable means, for rotatably supporting associated guide rollers 7, 9, 11, 12, 19 and two support members secured to the vertical chassis 6 for supporting associated inclined guide posts 8 and 18. Of these support members, only three support member 20, 21, and 22 are illustrated in the figures which support the guide roller 9, the inclined guide post 8, and the guide roller 19, respectively.

As is obvious from Figs. 3 and 4, the axis of rotation 2d of the drum assembly 2 is generally perpendicular to the front wall 3c of the tape cassette 3 such that a generally flat bottom 2f of the drum assembly 2 confronts the front wall 3c of the tape cassette 3.

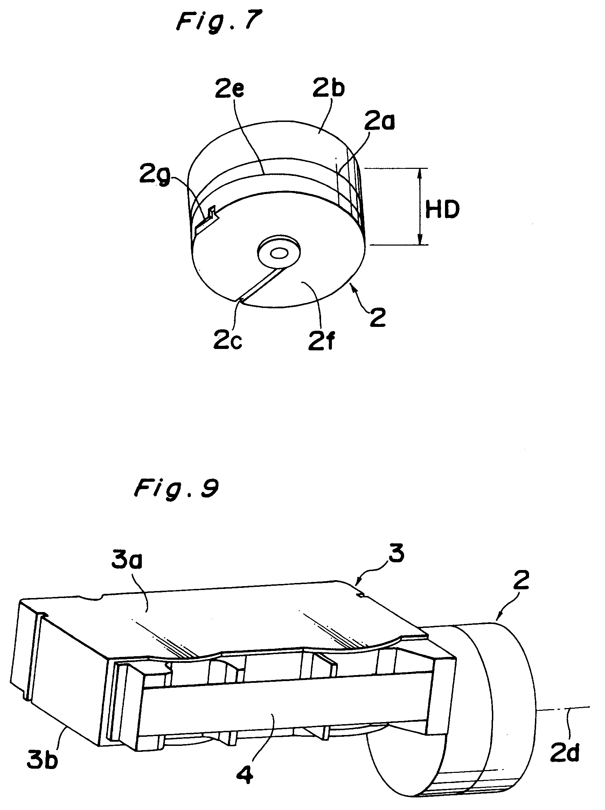

As shown in Fig. 7 depicting the drum assembly 2 of a height HD, the stationary drum 2a has two recesses 2c and 2g defined therein at the bottom 2f thereof and communicating with the outside circumference thereof. It is to be noted that while the recesses 2c and 2g are each in the form of a cut-out notch, they shall not be so limited and can be any cut shape extending over a wide area of the bottom 2f. The recesses 2c and 2g are away from the tape guide shoulder 2e of the stationary drum 2a, and are positioned to accommodate portions of and avoid contact with the intermediate back-up walls 3j and 3i of the tape cassette 3, respectively..

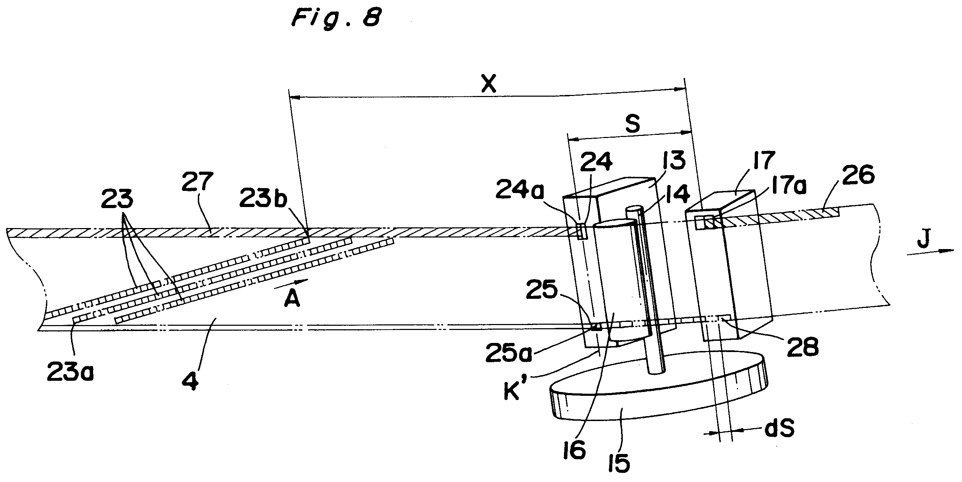

As shown in Fig. 8 indicating the relationship among the fixed head assembly 13, the fixed audio head 17, and the capstan spindle 14, the fixed head assembly 13 comprises an audio erase head 24 and a control head 25 having respective head gaps 24a and 25a defined therein, while the fixed audio head 17 has a head gap 17a defined therein. The audio erase head gap 24a and the control head gap 25a are positioned with a common gap center running through a center line K' widthwise to the magnetic tape 4. The relative positions of the fixed audio head gap 17a and the audio erase head gap 24a in the widthwise direction of the magnetic tape 4 is adjusted such that the area on which audio signals are recorded in the lengthwise direction of the magnetic tape 4 by the fixed audio head 17 will be erased by the audio erase head gap 24a. A control signal used for tape transport control is recorded on a narrow band at the bottom edge of the magnetic tape 4 by the control head gap 25a. Video signals are recorded on video recording tracks 23 by means of a magnetic head (not shown in the figures) provided on the rotary drum 2b. The magnetic head on the rotary drum 2b travel in a direction of an arrow A by rotation of the rotary drum 2b in a direction of an arrow I (Fig. 3). Each valid video signal ends at an end point 23b, and the distance from the end point 23b to the position of the fixed audio head gap 17a is fixed as a dimension X to match the phases of the audio and video signals. In Fig. 8, a linear audio track, a recorded audio signal, and a control pulse are indicated by 26, 27, and 28, respectively.

It is to be noted that in the above-described embodiment, although the control head gap 25a is defined in the fixed head assembly 13, it may be defined in the fixed audio head 17 so as to be in line with the head gap 17a in the widthwise direction of the magnetic tape 4.

The tape player 1 of the above-described construction operates as follows.

When the tape cassette 3 is loaded in the tape layer 1 and is properly positioned on the horizontal chassis 5, the loading operation is executed. In this loading operation, that portion of the magnetic tape 3 which is exposed to the outside of the tape cassette 3 is pulled out from the tape cassette 3 and wound in a spiral around the drum assembly 2 by the guide rollers 7, 9, 11, 12, and 19, as discussed previously. When a specific tape path is formed, as shown in Figs. 3 to 5, by the drum assembly 2, the guide rollers 7, 9, 11, 12, and 19, the inclined guide posts 8 and 18, the capstan spindle 14, and the fixed head assembly 13, and the fixed audio head 17, the pinch roller 16 presses against the capstan spindle 14, thus driving the capstan spindle 14 and transmitting rotation thereof to the magnetic tape 4. The magnetic tape 4 is thus driven at a constant speed in a direction of an arrow J.

At this moment, the only fixed guide between the point where the magnetic tape 4 trails off from the drum assembly 2 to the capstan spindle 14 is the fixed head assembly 13, thus suppressing the increase in tension from the drum assembly 2 to the capstan spindle 14, and making it possible to drive the magnetic tape 4 with a small drive load.

During recording, the rotary drum 2b rotates at 30 rps, and the magnetic tape 4 is transported by the rotation of the capstan spindle 14 at a constant 33.35 mm/s rate in the direction of the arrow J. The video signals are recorded to form the video recording tracks 23 by the magnetic head (not shown in the figures), and the audio signals are recorded to form the linear audio track 26 by the fixed audio head 17. When the linear audio signals are recorded, any previously recorded signal 27 is erased by the audio erase head 24. The control head 25 records a 30-Hz pulse signal at a known signal gap of dS. The distance S between the control head gap 25a and the fixed audio head gap 17a is an integer multiple of the control pulse gap dS. The capstan spindle 14 driving the magnetic tape 4 and the pinch roller 16 are positioned between the fixed head assembly 13 and the fixed audio head 17, effectively utilizing the area within the distance X, and thereby enabling a reduction in apparatus size. By separating the audio erase head 24 and the fixed audio head 17, an unerased space in the linear audio track equivalent to S/33.35 (mm/s) or approximately 0.5 sec. results, but no significant problems occur because this is approximately equal to the rise time of the capstan motor 15 and a motor required for drum rotation control.

During reproduction, rotation of the rotary drum 2b is controlled such that the frequency of a PG (pulse generator) signal counting one full rotation of the rotary drum 2b and the frequency of a playback signal of the control pulse 28 from the control head 25 may match to the 30-Hz signal from an internal clock (not shown in the figures) of the apparatus.

By means of this construction, the depth dimension of the tape player 1 becomes $(H + \beta)$, as best shown in Fig. 4, where $\beta$ is generally determined by the height HD of the drum assembly 2 and the size of the recesses 2c and 2g defined in the stationary drum 2a. Because the drum height HD is usually considerably less than the drum diameter D, and the size of the conventional apparatus as described above with reference to Fig. 10 is $(H + D + \alpha)$ (the tape cassette depth dimension H, the drum diameter D, and the allowance a for guide post positioning), it is obvious that

$$H + D + \alpha > H + \beta$$

and the apparatus of the present invention can be made smaller than the conventional apparatus. A reduction of at least 30% in the depth dimension can be achieved by means of the present invention.

Furthermore, because the distance S between the control head gap 25a and the fixed audio head gap 17a is an integer multiple of the pulse gap dS, no problems are caused by loading this tape cassette 3 into another magnetic recording and/or reproducing apparatus wherein the control head gap 25a and the fixed audio head gap 17a are in line with each other in the widthwise direction of the magnetic tape 4.

It is to be noted that although the bottom of the drum assembly 2 confronts the front wall 3c of the tape cassette 3 in the embodiment discussed above, the present invention shall not be so limited. The drum assembly 2 can be positioned, as shown in Fig. 9 for example, anywhere if the axis of rotation 2d of the rotary drum 2b is substantially within the plane L.

The horizontal and vertical chassis 5 and 6 are formed separately and secured to each other in the above embodiment, but these may be integrated insofar as a drum mounting surface and a cassette loading surface are defined thereon.

It is to be noted that the drum dimension of approximately 41.33 mm used by way of example in the above description conforms to the standard drum dimension of the VHS-C format. The present invention shall not be so limited, however, and can be effectively applied in DAT, 8 mm, and other magnetic recording and/or reproducing apparatuses having a rotary drum.

Although the present invention has been fully described by way of examples with reference to the accompanying drawings, it is to be noted here that various changes and modifications will be apparent to those skilled in the art. Therefore, unless such changes and modifications otherwise depart from the spirit and scope of the present invention, they should be construed as being included therein.

## Claims

1. A magnetic recording and/or reproducing apparatus (1) for recording or reproducing information on or from a magnetic tape (4) accommodated in a tape cassette (3), said apparatus (1) comprising:

   a chassis (5, 6) for mounting the tape cassette (3) loaded in the apparatus (1);

   a drum assembly (2) mounted on said chassis (5, 6) and having a plurality of magnetic heads mounted thereon, said drum assembly (2) having generally flat first and second surfaces opposite to each other and also having an axis of rotation (2d) lying in a plane generally perpendicular to a direction widthwise of the magnetic tape (4) accommodated in the tape cassette (3) mounted on said chassis (5, 6); and

   a plurality of guide members (7, 9, 11, 12, 19), movably mounted on said chassis (5, 6), for winding the magnetic tape (4) around the drum assembly (2) in a spiral path at a given angle of contact.

2. The apparatus (1) according to claim 1, wherein said chassis (5, 6) comprises a first chassis component (5) for mounting the tape cassette (3) loaded in the apparatus (1) and a second chassis component (6) on which said drum assembly (2) is mounted, said second chassis component (6) being secured to said first chassis component (5) so as to lie generally perpendicular thereto.

3. The apparatus (1) according to claim 1, wherein the axis of rotation (2d) of said drum assembly (2) is generally perpendicular to a first wall (3c) of the tape cassette (3) through which the magnetic tape (4) accommodated in the tape cassette (3) is drawn into the apparatus (1) during recording or reproduction, and wherein the first surface (2f) of said drum assembly (2) confronts the first wall (3c) of the tape cassette (3).

4. The apparatus (1) according to claim 3, wherein said chassis (5, 6) comprises a first chassis component (5) for mounting the tape cassette (3) loaded in the apparatus (1) and a second chassis component (6) on which said drum assembly (2) is mounted, said second chassis component (6) being secured to said first chassis component (5) so as to lie generally perpendicular thereto.

5. The apparatus (1) according to claim 1, further comprising a tape drive means (14), rotatably mounted on said chassis (5, 6), for driving the magnetic tape (4) in a direction longitudinally of the magnetic tape (4).

6. The apparatus (1) according to claim 5, wherein said tape drive means (14) is positioned opposite to the tape cassette (3) loaded in the apparatus (1) with respect to a plane on which said chassis (5, 6) lies.

7. A magnetic recording and/or reproducing apparatus (1) for recording or reproducing information on or from a magnetic tape (4) accommodated in a tape cassette (3), said tape cassette (3) having a first wall (3c) from which a plurality of second walls (3i, 3j) extend so as to define a plurality of recesses (R1, R2, R3), said apparatus (1) comprising:

   a chassis (5, 6) for mounting the tape cassette (3) loaded in the apparatus (1);

   a drum assembly (2) having a stationary drum (2a) securely mounted on said chassis (5, 6) and a rotary drum (2b) coaxially mounted above and rotatably supported by said stationary drum (2a), said stationary drum (2a) having a tape guide shoulder (2e) defined thereon so as to extend slantwise in a circumferential direction thereof for slidingly guiding and supporting one of opposite side edges of the magnetic tape (4), said rotary drum (2b) having a plurality of magnetic heads mounted thereon, said drum assembly (2) having generally flat first and second surfaces opposite to each other and also having an axis of rotation (2d) lying in a plane generally perpendicular to a direction widthwise of the magnetic tape (4) accommodated in the tape cassette (3) mounted on said chassis (5, 6), said first surface (2f) being formed on said stationary drum (2a) and having a plurality of recesses (2c, 2g) communicating with an outside circumference of said stationary drum (2a) so that the second walls (3i, 3j) of the tape cassette (3) are partially accommodated in associated recesses (2c, 2g) of the stationary drum (2a); and

a plurality of guide members (7, 9, 11, 12, 19), movably mounted on said chassis (5, 6), for winding the magnetic tape (4) around the drum assembly (2) in a spiral path at a specific angle of contact.

8. The apparatus (1) according to claim 7, wherein the recesses (2c, 2g) of said stationary drum (2a) are formed away from the tape guide shoulder (2e).

9. The apparatus (1) according to claim 7, wherein said chassis (5, 6) comprises a first chassis component (5) for mounting the tape cassette (3) loaded in the apparatus (1) and a second chassis component (6) on which said drum assembly (2) is mounted, said second chassis component (6) being secured to said first chassis component (5) so as to lie generally perpendicular thereto.

10. A magnetic recording and/or reproducing apparatus (1) for recording or reproducing information on or from a magnetic tape (4) accommodated in a tape cassette (3), said apparatus (1) comprising:

a chassis (5, 6) for mounting the tape cassette (3) loaded in the apparatus (1);

a drum assembly (2) mounted on said chassis (5, 6) and having a plurality of magnetic heads mounted thereon, said drum assembly (2) also having a tape guide shoulder (2e) defined thereon so as to extend slantwise in a circumferential direction thereof for slidingly guiding and supporting one of opposite first and second side edges of the magnetic tape (4);

a tape drive means (14), rotatably mounted on said chassis (5, 6), for driving the magnetic tape (4) in a direction longitudinally of the magnetic tape (4);

a plurality of guide members (7, 9, 11, 12, 19), movably mounted on said chassis (5, 6), for winding the magnetic tape (4) around the drum assembly (2) in a spiral path at a given angle of contact;

a fixed audio head (17), secured to said chassis (5, 6), for recording or reproducing signals on or from the magnetic tape (4) in the longitudinal direction of the magnetic tape (4);

an audio erase head (24), secured to said chassis (5, 6), for erasing only signals recorded by said fixed audio head (17); and

said tape drive means (14) being positioned between said fixed audio head (17) and said audio erase head (24).

11. The apparatus (1) according to claim 10, further comprising a control head (25), integrally formed with said audio erase head (24), for recording or reproducing a signal required for transport control of the magnetic tape (4), wherein said control head (25) is positioned so as to confront the first side edge of the magnetic tape (4) while said audio erase head (24) is positioned so as to confront the second side edge of the magnetic tape (4).

12. The apparatus (1) according to claim 11, wherein said drum assembly (2) having an axis of rotation (2d) lying in a plane generally perpendicular to a direction widthwise of the magnetic tape (4) accommodated in the tape cassette (3) mounted on said chassis (5, 6).

13. The apparatus (1) according to claim 11, wherein said chassis (5, 6) comprises a first chassis component (5) for mounting the tape cassette (3) loaded in the apparatus (1) and a second chassis component (6) on which said drum assembly (2) is mounted, said second chassis component (6) being secured to said first chassis component (5) so as to lie generally perpendicular thereto.

Fig.1

Fig.2

Fig.3

Fig.5

Fig.4

Fig.6

Fig. 7

Fig. 9

Fig. 8

EP 0 602 571 A2

EP 0 602 571 A2

Fig.10 PRIOR ART

14